(19) 

**Europäisches Patentamt**
**European Patent Office**
**Office européen des brevets**

(11) **EP 4 668 607 A1**

(12) **EUROPEAN PATENT APPLICATION**
published in accordance with Art. 153(4) EPC

(43) Date of publication:
24.12.2025 Bulletin 2025/52

(21) Application number: 24757198.7

(22) Date of filing: 14.02.2024

(51) International Patent Classification (IPC):
$H04B\ 7/06\ ^{(2006.01)}$   $H04W\ 52/02\ ^{(2009.01)}$
$H04W\ 52/36\ ^{(2009.01)}$   $H04W\ 24/08\ ^{(2009.01)}$
$H04W\ 88/02\ ^{(2009.01)}$

(52) Cooperative Patent Classification (CPC):
H04B 7/06; H04W 24/08; H04W 52/02;
H04W 52/36; H04W 88/02

(86) International application number:
PCT/KR2024/002064

(87) International publication number:
WO 2024/172474 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.02.2023 KR 20230020356
06.04.2023 KR 20230045645
12.05.2023 KR 20230061950

(71) Applicant: **LG Electronics Inc.**
**Yeongdeungpo-gu**
**Seoul 07336 (KR)**

(72) Inventors:
• **KIM, Seonwook**
**Seoul 06772 (KR)**
• **KIM, Hyungtae**
**Seoul 06772 (KR)**
• **PARK, Haewook**
**Seoul 06772 (KR)**
• **AHN, Seungjin**
**Seoul 06772 (KR)**
• **YANG, Suckchel**
**Seoul 06772 (KR)**
• **CHOI, Seunghwan**
**Seoul 06772 (KR)**

(74) Representative: **Plasseraud IP**
**104 Rue de Richelieu**
**CS92104**
**75080 Paris Cedex 02 (FR)**

(54) **APPARATUS AND METHOD FOR PERFORMING CHANNEL STATE INFORMATION FEEDBACK BY CONSIDERING NUMBER OF CHANNEL STATE INFORMATION PROCESSING UNITS IN WIRELESS COMMUNICATION SYSTEM**

(57) The purpose of the present disclosure is to perform channel state information (CSI) feedback by considering the number of CSI processing units (CPUs) in a wireless communication system. A method performed by a user equipment may comprise the steps of: receiving configuration information regarding a channel state information (CSI) report; receiving control information activating at least one sub-configuration from among a plurality of sub-configurations included in the CSI report; determining the number of first CSI processing units (CPUs) for the CSI report; on the basis of the number of first CPUs and the maximum number of supportable second CPUs, determining whether or not to drop the CSI report; if the CSI report is not dropped, transmitting a report message including the CSI report; and if the CSI report is dropped, transmitting a report message not including the CSI report.

EP 4 668 607 A1

# FIG. 15

base station
(1520)

UE
(1510)

Configure CSI report setting
which is associated with more
than one number of APs and/or
power offset values(S1501)

S1503 — Calculate O_CPU for
CSI report(s) that would be
carried in slot n

S1505 — Check which of CSI report(s)
can be updated based on
CPU occupation rule

CSI report(s) in slot n(S1507)

**Description**

**TECHNICAL FIELD**

The following description relates to a wireless communication system, and to a device and method for performing channel state information (CSI) feedback considering the number of CSI processing units in the wireless communication system.

**BACKGROUND ART**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

**DISCLOSURE**

**TECHNICAL PROBLEM**

The present disclosure relates to a device and a method for performing channel state information (CSI) feedback in consideration of the number of CSI processing units (CPU) in a wireless communication system.

The present disclosure relates to a device and a method for effectively determining the number of CPUs in a wireless communication system.

The present disclosure relates to a device and a method for supporting a technology for reducing energy consumption of a base station through effective determination of the number of CPUs in a wireless communication system.

The present disclosure relates to a device and a method for effectively determining whether to drop CPU reporting based on the number of CPUs for CSI reporting in a wireless communication system.

The present disclosure relates to a device and a method for determining the number of CPUs based on sub-configurations included in CSI reporting in a wireless communication system.

The present disclosure relates to a device and a method for determining the number of CPUs based on CSI-reference signal (RS) resources related to sub-configurations included in CSI reporting in a wireless communication system.

The present disclosure relates to a device and a method for determining the number of CPUs based on the number of antenna ports (AP) and/or power offset values related to sub-configurations included in CSI reporting in a wireless communication system.

The present disclosure relates to a device and a method for determining a CSI computation time based on sub-configurations included in CSI reporting in a wireless communication system.

The present disclosure relates to a device and a method for applying additional time corresponding to sub-configurations included in CSI reporting to the CSI computation time in a wireless communication system.

The present disclosure relates to a device and a method for determining whether to drop each sub-report corresponding to sub-configurations included in CSI reporting in a wireless communication system.

The technical purposes to be achieved in the present disclosure are not limited to the matters mentioned above, and other technical problems not mentioned may be considered by those skilled in the art to which the technical configuration of the present disclosure is applied from the embodiments of the present disclosure to be described below.

**TECHNICAL SOLUTION**

In one example of the present disclosure, a method performed by a UE in a wireless communication system may comprise: receiving configuration information for a channel state information (CSI) report; receiving control information activating at least one sub-configuration among a plurality of sub-configurations included in the CSI report; determining a number of first CSI processing units (CPUs) for the CSI report; determining whether to drop the CSI report based on the number of first CPUs and a maximum supported number of second CPUs; transmitting a report message including the CSI report based on that the CSI report is not dropped; and transmitting a report message not including the CSI report based on that the CSI report is dropped. The number of first CPUs is determined based on a number of CSI-reference signal (RS) resources corresponding to the at least one sub-configuration.

In one example of the present disclosure, a method performed by a UE in a wireless communication system may comprise a transceiver and a processor connected to the transceiver, wherein the processor may be configured to: receive configuration information for a channel state information (CSI) report; receive control information activating at least one sub-configuration among a plurality of sub-configuration included in the CSI report; determine a number of first CSI processing units (CPUs) for the CSI report; determine whether to drop the CSI report based on the number of first CPUs and a maximum supported number of second CPUs; transmit a report message including the CSI report based on that the CSI report is not dropped; and transmit a report message not including the CSI report based on that the CSI report is dropped, wherein the number of first CPUs is determined based on a number of CSI-RS resources corresponding to the at least one sub-configuration.

In one example of the present disclosure, a communication device may comprise at least one processor, and at least one computer memory connected to the at least one processor and storing instructions that direct operations when executed by the at least one processor, the operations comprising: receiving configuration information for a channel state information (CSI) report; receiving control information activating at least one sub-configuration among a plurality of sub-configuration included in the CSI report; determining a number of first CSI processing units (CPUs) for the CSI report; determining whether to drop the CSI report based on the number of first CPUs and a maximum supported number of second CPUs; transmitting a report message including the CSI report based on that the CSI report is not dropped; and transmitting a report message not including the CSI report based on that the CSI report is dropped. The number of first CPUs is determined based on a number of CSI-RS resources corresponding to the at least one sub-configuration.

In one example of the present disclosure, a non-transitory computer-readable medium storing at least one instruction may comprise the at least one instruction executable by a processor, wherein the at least one instruction causing a device, the processor, to: receive configuration information for a channel state information (CSI) report; receive control information activating at least one sub-configuration among a plurality of sub-configuration included in the CSI report; determine a number of first CSI processing units (CPUs) for the CSI report; determine whether to drop the CSI report based on the number of first CPUs and a maximum supported number of second CPUs; transmit a report message including the CSI report based on that the CSI report is not dropped; and transmit a report message not including the CSI report based on that the CSI report is dropped, wherein the number of first CPUs is determined based on a number of CSI-RS resources corresponding to the at least one sub-configuration.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

ADVANTAGEOUS EFFECTS

Effects as follows may be obtained by the embodiments based on the present disclosure.

According to the present disclosure, the energy consumption of a base station may be reduced.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

**BRIEF DESCRIPTION OF THE DRAWINGS**

FIG. 1 illustrates an example of a structure of a wireless communication system to which the present disclosure may be applied.
FIG. 2 illustrates an example of a wireless device applicable to the present disclosure.
FIG. 3 illustrates a frame structure in a wireless communication system to which the present disclosure may be applied.
FIG. 4 illustrates an example of a resource grid in a wireless communication system to which the present disclosure may be applied.
FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates a diagram illustrating an example in which a physical channel is mapped in a slot to which various embodiments are applicable.

FIG. 9 illustrates an example of an operation procedure of a base station supporting an network energy saving (NES) technology applicable to the present disclosure.

FIG. 10 illustrates an example of a procedure for CSI measurement and reporting applicable to the present disclosure.

FIG. 11 illustrates an example of a procedure for transmitting CSI reporting according to an embodiment of the present disclosure.

FIG. 12 illustrates an example of a procedure for determining the number of CPUs based on whether a sub-configuration is activated according to an embodiment of the present disclosure.

FIG. 13 illustrates an example of a procedure for transmitting CSI reporting based on a CSI computation time according to an embodiment of the present disclosure.

FIG. 14 illustrates an example of a procedure for performing CSI reporting based on the number of CPUs per sub-report according to an embodiment of the present disclosure.

FIG. 15 illustrates an example of a procedure for transmitting CSI reporting according to an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

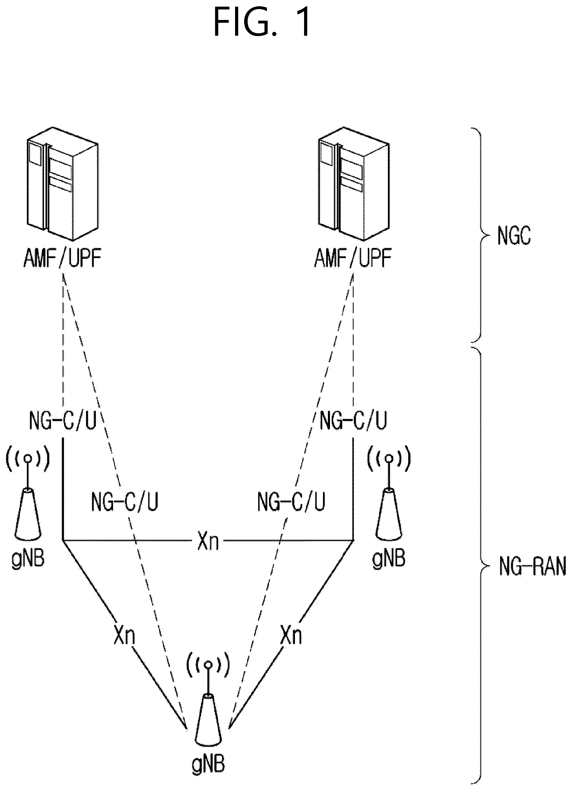

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

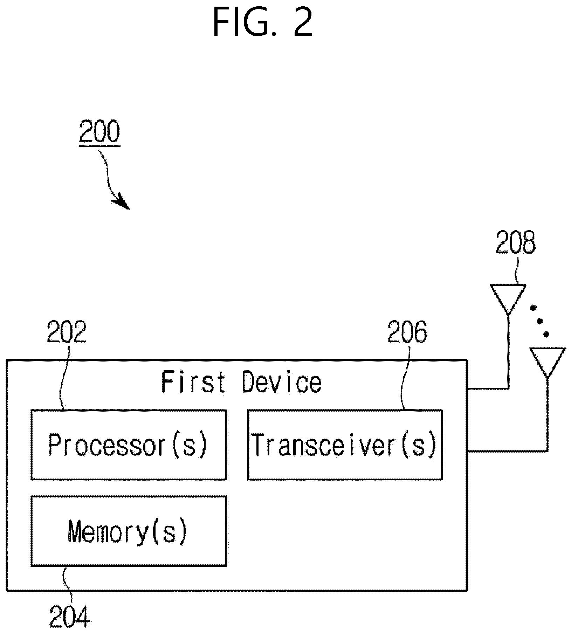

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

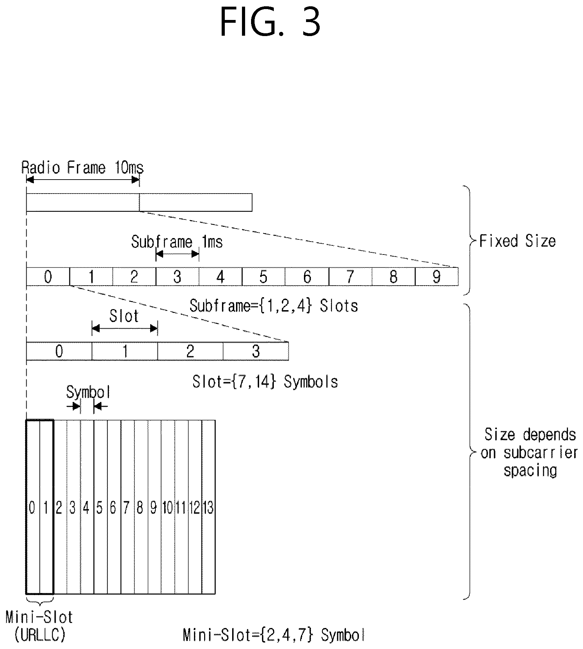

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$[kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ms. Here, the radio frame is configured with 10 subframes having a duration of $T_{sf} = (\Delta f_{max} \cdot N_f/1000)T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0, \cdots, N_{slot}^{subframe,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

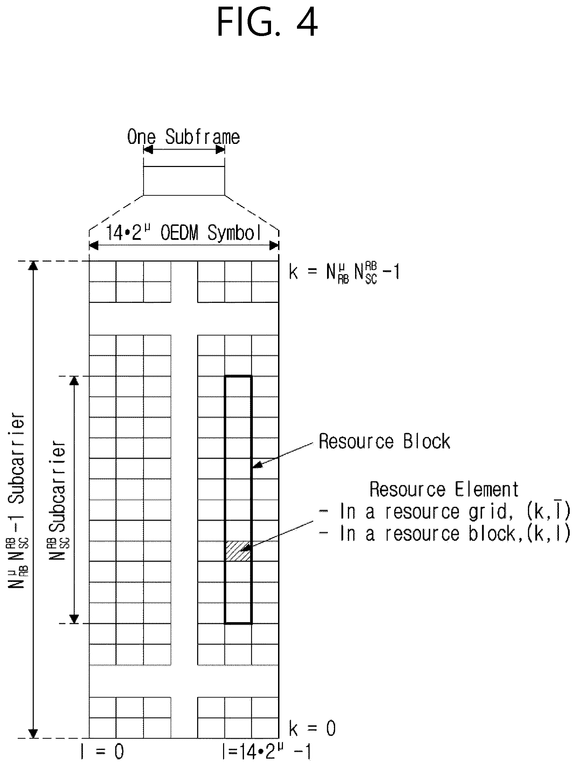

FIG. 4 exemplifies a resource grid in a wireless communication system to which the present disclosure may be applied.

Referring to FIG. 4, as an illustrative description, a resource grid is configured with $N_{RB}^{\mu}N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RB}^{\mu}N_{SC}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k, 1) is used. Here, 1=0, ..., $2^{\mu}N_{symb}^{(\mu)}$-1. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier

spacing configuration μ in a frequency domain is given as in the following Equation 1.

[Equation 1]

$$n_{CRB}^{\mu}=k/N_{sc}^{RB}$$

In Equation 1, k is defined relatively to point A so that k=0 corresponds to a subcarrier centering around point A. Physical resource blocks are numbered from 0 to $N_{BWP,i}^{size,\mu}-1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

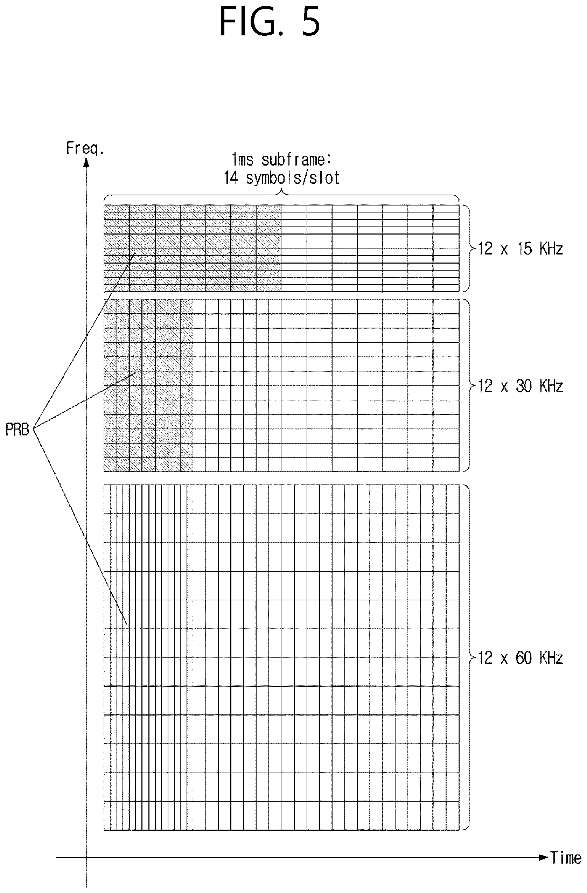

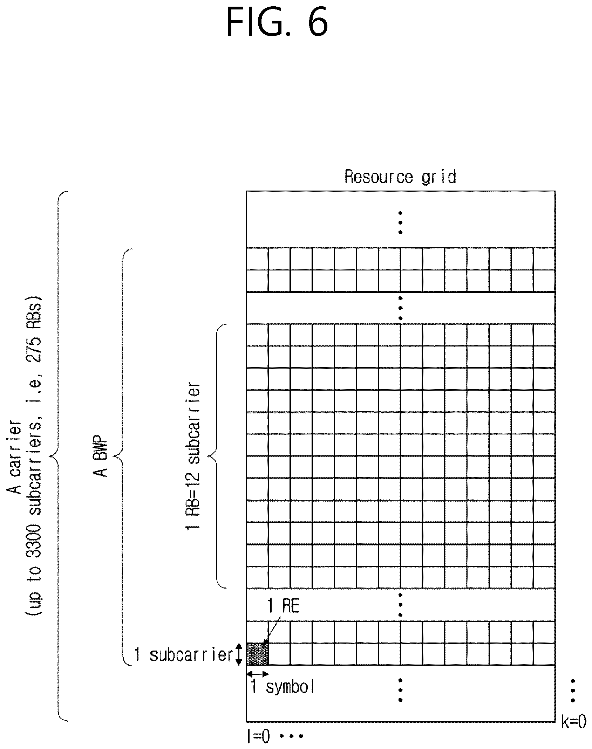

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

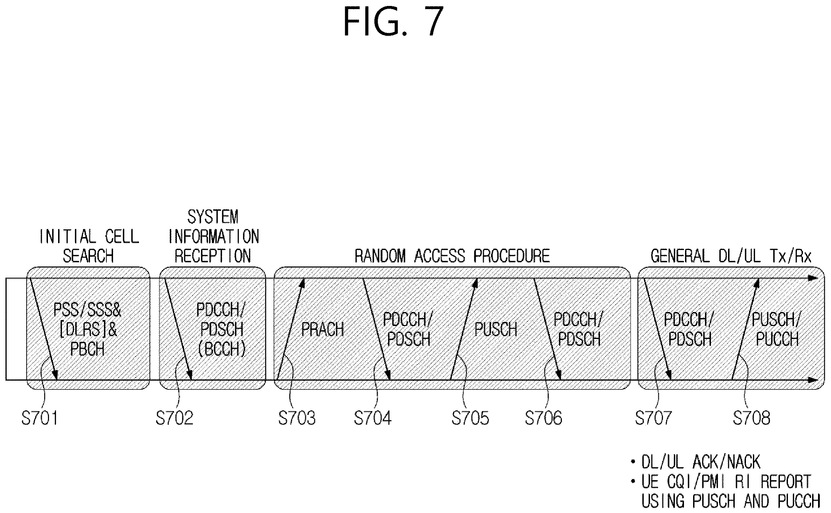

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

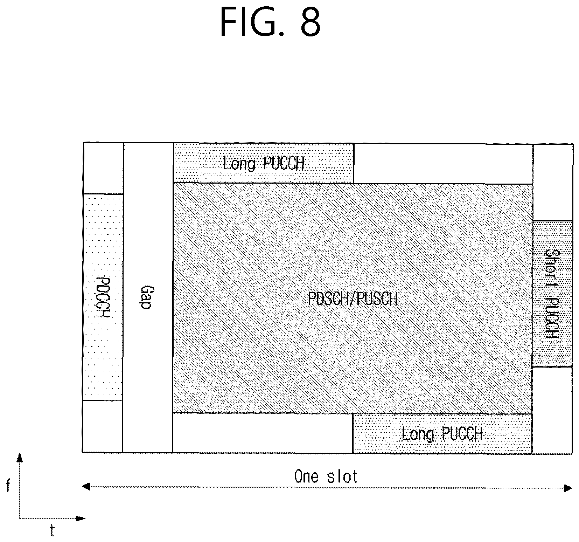

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 5 shows DCI formats transmitted over the PDCCH.

[Table 5]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 6 shows the usage of the PDCCH and transport channels according to the type of RNTI. Here, the transport channel means a transport channel related to data carried by a PDSCH/PUSCH scheduled by the PDCCH.

[Table 6]

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS (Configured Scheduling)-RNTI | Configured scheduled unicast transmission (activation, reactivation and retransmission) | DL-SCH, UL-SCH |
| CS-RNTI | Configured scheduled unicast transmission(deactivation) | N/A |

(continued)

| RNTI | Usage | Transport Channel |
|---|---|---|
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

[Table 7]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |

(continued)

| Search Space | Type | RNTI | Use Case |
|---|---|---|---|
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

Scheduling request (SR): The SR is information used to request a UL-SCH resource.

Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 8]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH Format 0 (PF0)

- Supportable UCI payload size: up to K bits (e.g., K=2)
- Number of OFDM symbols included in one PUCCH: 1 to X symbols (e.g., X=2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K=2)
- Number of OFDM symbols included in one PUCCH: Y to Z symbols (e.g., Y=4 and Z=14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K=2)
- Number of OFDM symbols included in one PUCCH: 1 to X symbols (e.g., X=2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. The DFT is applied to encoded UCI bits with no multiplexing between UEs.

Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

[Table 9]

| |
|---|
| 1. Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] |
| 2. Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3]<br>   • Note: No change for SSB transmission due to cell DTX/DRX.<br>   • Note: The impact to IDLE/INACTIVE UEs due to the above enhancement should be avoided. |
| 3. Specify the following techniques in spatial and power domains<br>   • Specify necessary enhancements on CSI and beam management related procedures including measurement and report, and signaling to enable efficient adaptation of spatial elements (e.g. antenna ports, active transceiver chains) [RAN1, RAN2]<br>   • Specify necessary enhancements on CSI related procedures including measurement and report, and signaling to enable efficient adaptation of power offset values between PDSCH and CSI-RS [RAN1, RAN2]<br>   • Note: Above objectives are only for UE specific channels/signals<br>   • Note: Legacy UE CSI/CSI-RS capabilities applies when considering total number of CSI reports and requirements |
| 4. Specify mechanism(s) to prevent legacy UEs camping on cells adopting the Rel-18 NES techniques, if necessary [RAN2] |
| 5. Specify CHO procedure enhancement(s) in case source/target cell is in NES mode [RAN2] |
| 6. Specify inter-node beam activation and enhancements on restricting paging in a limited area [RAN3]. |
| 7. Specify the corresponding RRM/RF core requirements, if necessary, for the above features [RAN4] |

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain.

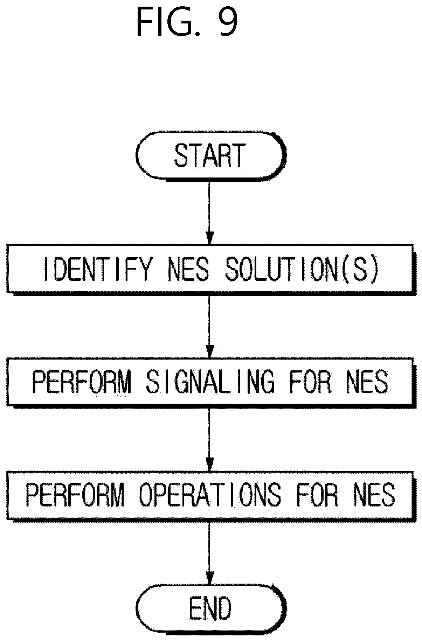

FIG. 9 illustrates an example of an operation procedure of a base station supporting an NES technology. Referring to FIG. 17, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 9, the NES technology may be performed. Examples of NES solutions that may be performed through a procedure such as that of FIG. 9 are as follows.

- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

<u>CSI Measurement and Reporting</u>

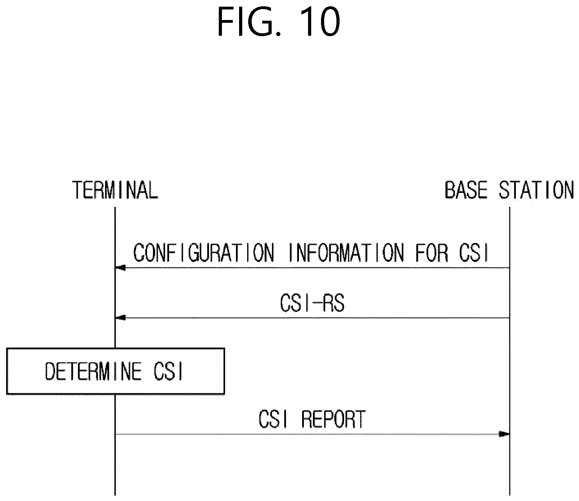

FIG. 10 illustrates an example of a procedure for CSI measurement and reporting.

Referring to FIG. 10, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through a MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, 0the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

Specific embodiments of the present disclosure

The base station may operate technologies for NES purposes such as controlling the on/off of the UE over a certain duration on a time axis, controlling transmission/reception resources for UE-common or UE-specific signals/channels, changing the amount of resources in a frequency axis, controlling transmission power, or turning on/off antenna ports, TRPs, etc. in a spatial domain. In the present disclosure, the listed technologies are referred to as 'NES technology' or 'NES_tech', and a state in which at least one of the NES_techs is applied is referred to as 'NES mode' or 'NES state'. The base station may inform the UE which NES_tech(s) are applied for each NES_tech or NES_tech group [Approach 1], or may pre-configure the NES_tech or NES_tech group(s) corresponding to each code-point of a specific indicator [Approach 2]. Here, the specific indicator may be indicated through DCI or MAC CE, or may be configured through higher layer signaling.

In the case of Approach 1, when at least one NES_tech is applied to the UE, the state may be defined as an NES mode or NES state, and furthermore, may be treated as a different NES mode or a different NES state depending on which NES_tech is applied. The NES mode or NES state may be used as a concept indicating whether at least one NES technology is applied, or, in addition thereto, further indicating which NES technology(ies) is applied. When the NES mode or NES state further indicates which NES technology(ies) is applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the corresponding indicator, the state may be defined as an NES mode or NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code-point other than '00' is indicated through the corresponding indicator, the state may be defined as an NES mode or NES state. Furthermore, the UE may determine NES state #1 when '01' is detected, NES state #2 when '10' is detected, and NES state #3 when '11' is detected. Accordingly, whether the state is an NES state and/or which NES state it is may be distinguished for each code-point.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Therefore, the present disclosure proposes an efficient CSI processing unit (CPU) occupancy scheme resulting from a plurality of the number of APs being linked or a plurality of the number of power offset values being linked for one CSI report configuration. In the present disclosure, '/' means 'and', 'or', or 'and/or' depending on the context.

A CPU refers to a unit required for a UE to simultaneously perform processing/update of CSI reports at a specific point in time. The CPU may be a physical unit or a logical unit. The maximum number of CPUs per carrier or for all carriers may be determined according to the capability reported by the UE.

As in Section 5.2.1.6 of [Table 10] below, when the number of CPUs currently occupied, L, and the maximum number of CPUs supported by the UE (hereinafter, '$N_{CPU}$') are given, the UE compares the number of CPUs $\sum_{n=0}^{M-1} O_{CPU}^{(n)}$ to be used for the current processing/update and the value $\{N_{CPU} - L\}$. If the number of unoccupied CPUs is smaller than the number of CPUs to be used for the current processing/update, CSI information corresponding to some CSI reports with lower priority may not be updated according to the priority of the CSI reports.

Meanwhile, as in Section 5.4 of [Table 10], minimum values of the processing time of the UE are also defined according to the configuration/type of the CSI report. [Table 10] below is an excerpt from TS 38.214 v17.3.0.

[Table 10]

| 5.2.1.6 | CSI processing criteria |
|---|---|

The UE indicates the number of supported simultaneous CSI calculations $N_{CPU}$ with parameter *simultaneousCSI-Repo rtsPerCC* in a component carrier, and *simultaneousCSI-ReportsAllCC* across all component carriers. If a UE supports $N_{CPU}$ simultaneous CSI calculations it is said to have $N_{CPU}$ CSI processing units for processing CSI reports. If $L$ CPUs are occupied for calculation of CSI reports in a given OFDM symbol, the UE has $N_{CPU} - L$ unoccupied CP Us. If $N$ CSI reports start occupying their respective CPUs on the same OFDM symbol on which $N_{CPU} - L$ CPUs are unoccupied, where each CSI report $n = 0, ..., N - 1$ corresponds to $O_{CPU}^{(n)}$, the UE is not required to update the $N - M$ requested CSI reports with lowest priority (according to Clause 5.2.5), where $0 \leq M \leq N$ is the largest value such that $\sum_{n=0}^{M-1} O_{CPU}^{(n)} \leq N_{CPU} - L$ holds.

A UE is not expected to be configured with an aperiodic CSI trigger state containing more than $N_{CPU}$ Reporting Se ttings. Processing of a CSI report occupies a number of CPUs for a number of symbols as follows:

- $O_{CPU} = 0$ for a CSI report with CSI-ReportConfig with higher layer parameter *reportQuantity* set to 'none' an d *CSI-RS-ResourceSet* with higher layer parameter *trs-Info* configured

- $O_{CPU} = 1$ for a CSI report with *CSI-ReportConfig* with higher layer parameter *reportQuantity* set to 'cri-RSR P', 'ssb-Index-RSRP', 'cri-SINR', 'ssb-Index-SINR', 'cri-RSRP- Index', 'ssb-Index-RSRP- Index', 'cri-SINR- Index ', 'ssb-Index-SINR- Index ' or 'none' (and *CSI-RS-ResourceSet* with higher layer parameter *trs-Info* not config ured)

- for a CSI report with *CSI-ReportConfig* with higher layer parameter *reportQuantity* set to 'cri-RI-PMI-CQI', ' cri-RI-i1', 'cri-RI-i1-CQI', 'cri-RI-CQI', or 'cri-RI-LI-PMI-CQI',

  - if max{ $\mu_{PDCCH}$, $\mu_{CSI-RS}$, $\mu_{UL}$} $\leq 3$, and if a CSI report is aperiodically triggered without transmitting a P USCH with either transport block or HARQ-ACK or both when $L = 0$ CPUs are occupied, where the C SI corresponds to a single CSI with wideband frequency-granularity and to at most 4 CSI-RS ports in a single resource without CRI report and where *codebookType* is set to 'typeI-SinglePanel' or where *report Quantity* is set to 'cri-RI-CQI', $O_{CPU} = N_{CPU}$,

  - If a *CSI-ReportConfig* is configured with *codebookType* set to 'typeI-SinglePanel' and the corresponding C SI-RS Resource Set for channel measurement is configured with two Resource Groups and $N$ Resource P airs, $O_{CPU} = X \cdot N + M$, where $X$ is the number of CPUs occupied by a pair of CMRs subject to *mTRP-CSI-numCPU-r17* and $M$ is defined in clause 5.2.1.4.2.

  - otherwise, $O_{CPU} = K_S$, where $K_S$ is the number of CSI-RS resources in the CSI-RS resource set for chann el measurement.

For a CSI report with *CSI-ReportConfig* with higher layer parameter *reportQuantity* not set to 'none', the CPU(s) ar e occupied for a number of OFDM symbols as follows:

- A periodic or semi-persistent CSI report (excluding an initial semi-persistent CSI report on PUSCH after the PDCCH triggering the report) occupies CPU(s) from the first symbol of the earliest one of each CSI-RS/CSI -IM/SSB resource for channel or interference measurement, respective latest CSI-RS/CSI-IM/SSB occasion no

later than the corresponding CSI reference resource, until the last symbol of the configured PUSCH/PUCCH carrying the report.

- An aperiodic CSI report occupies CPU(s) from the first symbol after the PDCCH triggering the CSI report until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

- An initial semi-persistent CSI report on PUSCH after the PDCCH trigger occupies CPU(s) from the first symbol after the PDCCH until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

For a CSI report with *CSI-ReportConfig* with higher layer parameter *reportQuantity* set to 'none' and *CSI-RS-Resource ceSet* with higher layer parameter *trs-Info* not configured, the CPU(s) are occupied for a number of OFDM symbols as follows:

- A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until $Z_3'$ symbols after the last symbol of the latest one of the CSI-RS/SSB resource for channel measurement for L1-RSRP computation in each transmission occasion.

- An aperiodic CSI report occupies CPU(s) from the first symbol after the PDCCH triggering the CSI report until the last symbol between $Z_3$ symbols after the first symbol after the PDCCH triggering the CSI report and $Z_3'$ symbols after the last symbol of the latest one of each CSI-RS/SSB resource for channel measurement for L1-RSRP computation.

where $(Z_3, Z_3')$ are defined in the table 5.4-2.

In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with *searchSpaceLinking*, for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. If a CSI-RS resource is referred $N$ times by one or more CSI Reporting Settings, the CSI-RS resource and the CSI-RS ports within the CSI-RS resource are counted $N$ times. For a CSI-RS Resource Set for channel measurement configured with two Resource Groups and $N$ Resource Pairs, if a CSI-RS resource is referred $X$ times by one of the $M$ CSI-RS resources, where

$M$ is defined in clause 5.2.1.4.2, and/or one or two Resource Pairs, the CSI-RS resource and the CSI-RS ports with in the CSI-RS resource are counted $X$ times.

## 5.4 UE CSI computation time

When the *CSI request* field on a DCI triggers a CSI report(s) on PUSCH, the UE shall provide a valid CSI report for the $n$-th triggered report,

- if the first uplink symbol to carry the corresponding CSI report(s) including the effect of the timing advance , starts no earlier than at symbol $Z_{ref}$, and

- if the first uplink symbol to carry the $n$-th CSI report including the effect of the timing advance, starts no e arlier than at symbol $Z'_{ref}(n)$,

where $Z_{ref}$ is defined as the next uplink symbol with its CP starting $T_{pmx,CSI} = (Z)(2048+144) \cdot \kappa 2^{-\mu} \cdot T_C + T_{switch}$ after th e end of the last symbol of the PDCCH triggering the CSI report(s), and where $Z'_{ref}(n)$, is defined as the next upli nk symbol with its CP starting $T'_{pmx,CSI} = (Z')(2048+144) \cdot \kappa 2^{-\mu} \cdot T_C$ after the end of the last symbol in time of the l atest of: aperiodic CSI-RS resource for channel measurements, aperiodic CSI-IM used for interference measurements, and aperiodic NZP CSI-RS for interference measurement, when aperiodic CSI-RS is used for channel measurement for the $n$-th triggered CSI report, and where $T_{switch}$ is defined in clause 6.4 and is applied only if $Z_1$ of table 5.4-1 is applied.

If the PUSCH indicated by the DCI is overlapping with another PUCCH or PUSCH, then the CSI report(s) are mu ltiplexed following the procedure in clause 9.2.5 of [6, TS 38.213] and clause 5.2.5 when applicable, otherwise the CSI report(s) are transmitted on the PUSCH indicated by the DCI.

When the *CSI request* field on a DCI triggers a CSI report(s) on PUSCH, if the first uplink symbol to carry the c orresponding CSI report(s) including the effect of the timing advance, starts earlier than at symbol $Z_{ref}$,

- the UE may ignore the scheduling DCI if no HARQ-ACK or transport block is multiplexed on the PUSCH.

When the *CSI request* field on a DCI triggers a CSI report(s) on PUSCH, if the first uplink symbol to carry the $n$ -th CSI report including the effect of the timing advance, starts earlier than at symbol $Z'_{ref}(n)$,

- the UE may ignore the scheduling DCI if the number of triggered reports is one and no HARQ-ACK or tra nsport block is multiplexed on the PUSCH

- Otherwise, the UE is not required to update the CSI for the $n$-th triggered CSI report.

When the PDCCH reception includes two PDCCH candidates from two respective search space sets, as described in clause 10.1 of [6, TS 38.213], for the purpose of determining the las t symbol of the PDCCH triggering the CSI report(s), the PDCCH candidate that ends later in time is used.

$Z$, $Z'$ and $\mu$ are defined as:

$$Z = \max_{m=0,...,M-1}(Z(m)) \quad \text{and} \quad Z' = \max_{m=0,...,M-1}(Z'(m)),$$ where $M$ is the number of updated CSI report(s) according to Clause 5.2.1.6, $(Z(m), Z'(m))$ corresponds to the $m$-th updated CSI report and is defined as

- $(Z_1, Z'_1)$ of the table 5.4-1 if max{ $\mu_{PDCCH}$, $\mu_{CSI\text{-}RS}$, $\mu_{UL}$} $\leq$ 3 and if the CSI is triggered without a PUSCH with either transport block or HARQ-ACK or both when $L = 0$ CPUs are occupied (according to Clause 5.2.1.6) and the CSI to be transmitted is a single CSI and corresponds to wideband frequency-granularity where the CSI corresponds to at most 4 CSI-RS ports in a single resource without CRI report and where *Codebo okType* is set to 'typeI-SinglePanel' or where *reportQuantity* is set to 'cri-RI-CQI', or

- $(Z_1, Z'_1)$ of the table 5.4-2 if the CSI to be transmitted corresponds to wideband frequency-granularity where the CSI corresponds to at most 4 CSI-RS ports in a single resource without CRI report and where *Codeboo kType* is set to 'typeI-SinglePanel' or where *reportQuantity* is set to 'cri-RI-CQI', or

- $(Z_1, Z'_1)$ of the table 5.4-2 if the CSI to be transmitted corresponds to wideband frequency-granularity where the *reportQuantity* is set to 'ssb-Index-SINR', 'cri-SINR', 'ssb-Index-SINR- Index ', or 'cri-SINR- Index ', or

- $(Z_3, Z'_3)$ of the table 5.4-2 if *reportQuantity* is set to 'cri-RSRP', 'ssb-Index-RSRP', 'cri-RSRP- Index' or 'ssb-Index-RSRP- Index ', where $X\mu$ is according to UE reported capability *beamReportTiming* and $KB_l$ is according to UE reported capability *beamSwitchTiming* as defined in [13, TS 38.306], or

- $(Z_2, Z'_2)$ of table 5.4-2 otherwise.

- $\mu$ of table 5.4-1 and table 5.4-2 corresponds to the min ($\mu_{PDCCH}$, $\mu_{CSI\text{-}RS}$, $\mu_{UL}$) where the $\mu_{PDCCH}$ corresponds to the subcarrier spacing of the PDCCH with which the DCI was transmitted and $\mu_{UL}$ corresponds to the subcarrier spacing of the PUSCH with which the CSI report is to be transmitted and $\mu_{CSI\text{-}RS}$ corresponds to the minimum subcarrier spacing of the aperiodic CSI-RS triggered by the DCI

**Table 5.4-1: CSI computation delay requirement 1**

| $\mu$ | Z1 [symbols] | |
|---|---|---|
| | Z1 | Z'1 |
| 0 | 10 | 8 |
| 1 | 13 | 11 |
| 2 | 25 | 21 |
| 3 | 43 | 36 |

**Table 5.4-2: CSI computation delay requirement 2**

| $\mu$ | Z1 [symbols] | | Z2 [symbols] | | Z3 [symbols] | |
|---|---|---|---|---|---|---|
| | Z1 | Z'1 | Z2 | Z'2 | Z3 | Z'3 |
| 0 | 22 | 16 | 40 | 37 | 22 | X0 |
| 1 | 33 | 30 | 72 | 69 | 33 | X1 |
| 2 | 44 | 42 | 141 | 140 | min(44,X2+ KB1) | X2 |
| 3 | 97 | 85 | 152 | 140 | min(97, X3+ KB2 ) | X3 |
| 5 | 388 | 340 | 608 | 560 | min(388, X5+ KB 3) | X5 |
| 6 | 776 | 680 | 1216 | 1120 | min(776, X6+ KB 4) | X6 |

The base station may link CSI-RS resources or resource sets having different APs, or may link a plurality of the number of power offsets (e.g., a powerControlOffset parameter indicating a power offset value between a PDSCH and a CSI-RS, a powerControlOffsetSS parameter indicating a power offset value between an SSS and a CSI-RS, etc.) for one CSI report setting (e.g., CSI-ReportConfig).

Specifically, at least one CSI framework among the following methods may be introduced.

- Framework #1: For one CMR (channel measurement resource) or one IMR (interference measurement resource) within a CSI-ReportConfig, a plurality of CSI-RS resource sets are associated. Here, the CMR may be configured by a resourcesForChannelMeasurement parameter, and the IMR may be configured by a csi-IM-ResourcesForInterference parameter or an nzp-CSI-RS-ResourcesForInterference parameter. For example, CSI-RS resource set #1 and CSI-RS resource set #2 may be associated for the CMR, and the CSI-RS resources belonging to CSI-RS resource set #1 may be composed of 16 antenna ports (APs), and the CSI-RS resources belonging to CSI-RS resource set #2 may be composed of 8 antenna ports.
- Framework #2: When one CSI-RS resource set related to one CMR or one IMR within a CSI-ReportConfig is configured, one or more CSI-RS resources in the corresponding CSI-RS resource set may be configured with different attributes such as the number of APs and/or power offsets. For example, for CSI-RS resource set #1 configured as the CMR, CSI-RS resource #1 belonging to CSI-RS resource set #1 may be configured with 16 APs, and CSI-RS resource #2 belonging to the same set may be configured with 8 APs. For example, for CSI-RS resource set #1 configured as the CMR, CSI-RS resource #1 belonging to CSI-RS resource set #1 may be configured with power offset #1, and CSI-RS resource #2 belonging to the same set may be configured with power offset #2.
- Framework #3: When one CSI-RS resource set related to one CMR or one IMR within a CSI-ReportConfig is configured, some or all of the CSI-RS resources in the corresponding set may be configured with a plurality of AP numbers and/or power offset values. For example, for CSI-RS resource set #1 configured as the CMR, CSI-RS resource #1 belonging to CSI-RS resource set #1 may be configured with up to 16 APs, and CSI reporting using at least one AP among them may be configured. Alternatively, CSI-RS resource #2 belonging to the same CSI-RS resource set #1 may be configured with a plurality of power offset values, and CSI reporting using all or some of the power offsets may be configured.

In the CSI frameworks described above, the CSI reporting method may be defined through at least one of the following options.

- Option #1: CSIs considering a plurality of AP numbers and/or a plurality of power offset values configured for one CSI report may all be included in one CSI report. Alternatively, CSIs considering a plurality of AP numbers and/or a plurality of power offset values may be included in one CSI report through configuration and/or indication by the base station.

Here, the AP numbers and/or power offset values configured and/or indicated by the base station may be a part of the AP numbers and/or power offset values configured for the corresponding CSI report.

- Option #2: Even when a plurality of AP numbers and/or a plurality of power offset values are configured for one CSI report, CSIs considering a single AP number and/or a single power offset value may be included in one CSI report through configuration and/or indication by the base station.
- Option #3: Even when a plurality of AP numbers and/or a plurality of power offset values are configured for one CSI report, CSIs considering some AP numbers and/or some power offset values may be included in one CSI report through UE determination/decision. Here, the UE determination/decision may be based on a configuration by the base station or on predefined criteria.

In the CSI-ReportConfig, L sub-configurations greater than 1 may be configured, and each sub-configuration may correspond to one spatial domain adaptation pattern or one power domain adaptation pattern. Here, a spatial domain adaptation pattern may correspond to a specific AP number or AP on/off pattern, or may correspond to a specific CSI-RS power value. Here, the CSI-RS power value may include a CSI-RS power value determined by a parameter (e.g., powerControlOffsetSS) indicating a power offset value between SSS and CSI-RS. In addition, the reason why the spatial domain adaptation pattern may correspond to the CSI-RS power value is that a turn-off of some antenna elements corresponding to one AP may affect the CSI-RS power value.

When Framework #2 is applied, if CSI-RS index #n1 belonging to a resource set is configured with the number of A1 APs or a power value P1, and CSI-RS index #n2 belonging to the same resource set is configured with the number of A2 APs or a power value P2, CSI-RS index #n1 may be related to sub-configuration index #s1, and CSI-RS index #n2 may be related to sub-configuration index #s2.

When Framework #3 is applied, if CSI-RS index #n1 belonging to a resource set is configured with the number of A1 APs or power values P1/P2, sub-configuration index #s1 may be related to the number of A1 APs or the power value P1, and sub-configuration index #s2 may be related to the number of A2 APs, which is smaller than A1 and corresponds to CSI-RS index #n1, or with the power value P2. Accordingly, the spatial domain adaptation pattern may be configured differently for each sub-configuration. Here, a difference in the power domain adaptation pattern may mean that the power offset value (e.g., a power offset value determined by a powerControlOffset parameter representing a power offset value between PDSCH and CSI-RS, a powerControlOffsetSS parameter representing a power offset value between SSS and CSI-RS, etc.) is different.

When Framework #2 is applied, if CSI-RS index #n1 belonging to a resource set is configured with a power value P1, and CSI-RS index #n2 belonging to the same resource set is configured with a power value P2, CSI-RS index #n1 may be related to sub-configuration index #s1, and CSI-RS index #n2 may be related to sub-configuration index #s2. Accordingly, the power domain adaptation pattern may be configured differently for each sub-configuration.

When Framework #3 is applied, if CSI-RS index #n1 belonging to a resource set is configured with a power value P1 and a power value P2, sub-configuration index #s1 may be related to the power value P1, and sub-configuration index #s2 may be related to the power value P2. Accordingly, the power domain adaptation pattern may be configured differently for each sub-configuration. The UE may feedback to the base station a CSI report including CSIs corresponding to N sub-configurations, which are 1 to L, by utilizing one of Option#1/2/3 among L sub-configurations.

Therefore, the present disclosure proposes a CPU occupancy technique in consideration of the above-described CSI frameworks and options for CSI reporting. The CPU is occupied by CSI reporting, and the number of CPUs occupied by any one CSI reporting is referred to as '$O_{CPU}$'.

[Embodiment #1] Determining an $O_{CPU}$ value corresponding to the processing of one CSI report

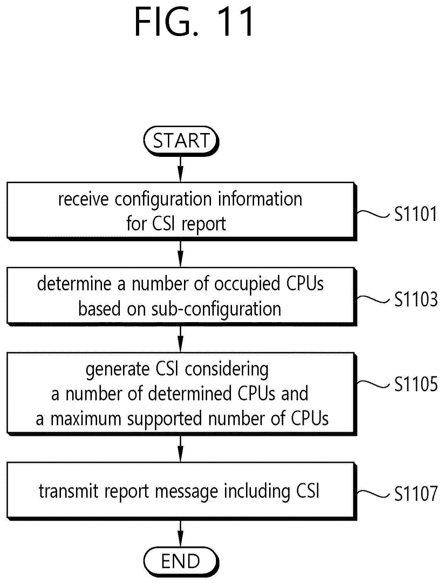

FIG. 11 illustrates an example of a procedure for transmitting a CSI report according to an embodiment of the present disclosure. FIG. 11 exemplifies a method performed by a UE.

Referring to FIG. 11, in step S1101, the UE receives configuration information for the CSI report. The configuration information may include information related to a CSI-RS resource or resource set, a number of APs, a power offset, and the like, related to the CSI report. In addition, the configuration information may include a plurality of sub-configurations, and the sub-configurations may be related to subsets of different number of APs or power offset values.

In step S1103, the UE determines the number of CPUs to be occupied based on the sub-configurations included in the CSI report configuration. In other words, the UE determines at least one $O_{CPU}$ value required for at least one CSI report based on the configuration information. In this case, the UE may determine the at least one $O_{CPU}$ value in consideration of the sub-configurations, specifically, based on an operation policy (e.g., framework #1/2/3, option #1/2/3, etc.) for the sub-configurations, and a number of APs and power offset values related to each of the sub-configurations. For example, the UE may determine an $O_{CPU}$ value corresponding to the CSI report based on the number of AP number subsets related to the sub-configurations and/or the number of power offset values. In this case, among the sub-configurations, when only some are activated according to aperiodic operation or semi-persistent operation, the activation state of the sub-configurations may be considered. For example, the greater the number of CSI-RS resources related to the at least one CSI considered, the greater the at least one $O_{CPU}$ value may be determined. In addition, when N CSI reports are configured to be processed or updated at that opportunity, the UE may determine $O^{(0)}_{CPU}$ value to $O^{(N-1)}_{CPU}$ value, that is, N $O_{CPU}$ values.

In step S1105, the UE generates at least one CSI in consideration of the determined number of CPUs and the maximum supported number of CPUs. That is, the UE determines the number of unoccupied CPUs by subtracting the already occupied number of CPUs $N_{CPU}$ from the maximum supported number of CPUs $N_{CPU}$, and compares the number of CPUs for the configured CSI reports (e.g., the sum of $O_{CPU}$ values) with the number of unoccupied CPUs. When the number of CPUs for the configured CSI reports is greater than the number of unoccupied CPUs, the UE may drop at least one CSI report based on priority. Accordingly, for the remaining at least one CSI report excluding the dropped at least one CSI report, the UE may measure a channel based on a reference signal and generate at least one CSI.

In step S1107, the UE transmits a report message including at least one CSI. In other words, the UE generates a report message including at least one CSI and may transmit the report message to the base station through a resource indicated by the configuration information.

As described with reference to FIG. 11, the UE may determine the number of CPUs required based on the CSI report configuration and the sub-configurations. Specifically, the number of CPUs required for the configured CSI report may be determined based on at least one of the sub-configurations included in the CSI report configuration, the number of CSI-RS resources or CSI-RS resource sets, the number of AP number subsets applied to the sub-configurations, and the number of power offset values applied to the sub-configurations. Hereinafter, the present disclosure describes specific embodiments for determining an $O_{CPU}$ value of the number of CPUs.

Section 5.2.1.6 of [Table 10] defines the $O_{CPU}$ value as 1 when the reportQuantity parameter in CSI-ReportConfig is set to 'cri-RSRP', 'ssb-Index-RSRP', 'cri-SINR', 'ssb-Index-SINR', 'cri-RSRP-Index', 'ssb-Index-RSRP-Index', 'cri-SINR-Index', 'ssb-Index-SINR-Index', or 'none'.

-　As in framework #1/2/3, when a plurality of the number of APs and/or a plurality of the number of power offset values are related within a configuration (e.g., CSI-ReportConfig) for one CSI report, or when L sub-configurations are included in CSI-ReportConfig, or when the UE may perform a CSI report including CSI information for M sub-configurations greater than 1 among the L sub-configurations. In this case, the $O_{CPU}$ value may be defined to be greater than 1. For example, when the 'cri-RSRP' or 'cri-SINR' parameter is configured, but CSI-RS resource(s) or CSI-RS resource set(s) consisting of 8 APs and CSI-RS resource(s) or CSI-RS resource set(s) consisting of 16 APs are related within CSI-ReportConfig, the base station may determine the $O_{CPU}$ value as 2. That is, as the number of different AP is 2, the $O_{CPU}$ value may be determined as 2.

In addition, the $O_{CPU}$ value may be determined differently depending on one of option #1/2/3. For example, in the case of option #2, since the actual CSI report is related to a single AP number and/or a single power offset value, the $O_{CPU}$ value may be determined as 1. In contrast, in the case of option #1/3, since one CSI report is related to a plurality of the number of APs and/or plurality of the number of power offset values, the $O_{CPU}$ value may be determined to be greater than 1. In addition, in the case of option #1/3, the $O_{CPU}$ value may be determined based on capability reporting of the UE. For example, even when K APs and/or power offset values are related within one CSI report, the UE may report, through capability signaling, that the $O_{CPU}$ value for the CSI report is N, which is less than or equal to K. In this case, the base station may determine the $O_{CPU}$ value for the CSI report as N. As another example, when L sub-configurations are included in CSI-ReportConfig and the UE performs a CSI report including CSI information for M sub-configurations, where M is greater than 1 and less than or equal to L, the $O_{CPU}$ value for the CSI report may be determined as M.

-　As in framework #1/2/3, when a plurality of the number of APs and/or a plurality of the number of power offset values are related within one CSI-ReportConfig, when, as in option #1/3, one CSI report is related to a plurality of the number of APs and/or a plurality of the number of power offset values, when L sub-configurations are included in CSI-ReportConfig, or when the UE performs a CSI report including CSI information for M sub-configurations greater than 1 among the L sub-configurations, such a case may occur. In this case, even when the reportQuantity parameter in CSI-ReportConfig is configured to 'cri-RSRP', 'ssb-Index-RSRP', 'cri-SINR', 'ssb-Index-SINR', 'cri-RSRP-Index', 'ssb-Index-RSRP-Index', 'cri-SINR-Index', 'ssb-Index-SINR-Index', or 'none', it may be defined to follow the rule for the case where 'cri-RI-PMI-CQI', 'cri-RI-i1', 'cri-RI-i1-CQI', 'cri-RI-CQI', or 'cri-RI-LI-PMI-CQI' is configured.

According to Section 5.2.1.6 of [Table 10], when the reportQuantity parameter in CSI-ReportConfig is configured to 'cri-RI-PMI-CQI', 'cri-RI-i1', 'cri-RI-i1-CQI', 'cri-RI-CQI', or 'cri-RI-LI-PMI-CQI', if a specific condition is satisfied, the $O_{CPU}$ value is defined as Ks, which is the number of CSI-RS resources belonging to the CSI-RS resource set for CMR.

-　As in framework #1, when a plurality of CSI-RS resource sets for CMR are related within a configuration (e.g., CSI-ReportConfig) for one CSI report, the $O_{CPU}$ value may be the total sum of the numbers of CSI-RS resources included in all or some of the CSI-RS resource sets. For example, when CSI-RS resource set #1, CSI-RS resource set #2, and CSI-RS resource set #3 are related for the CMR, the K1 CSI-RS resources belonging to set #1 are configured with 16 APs, the K2 CSI-RS resources belonging to set #2 are configured with 8 APs, and the K3 CSI-RS resources belonging to set #3 are configured with 4 APs, the $O_{CPU}$ value may be determined as K1+K2+K3.

In the case of a CSI report configuration such as framework #1, the $O_{CPU}$ value may be determined differently depending on option #1/2/3. For example, in option #1, when the base station, through configuration/indication, indicates feedback of only the CSI report for set #1/#2, the $O_{CPU}$ value may be determined as K1+K2. If there is no separate configuration/indication and CSI reporting is configured for all sets, the $O_{CPU}$ value may be determined as K1+K2+K3. As another example, in option #2, when the base station, through configuration/indication, indicates feedback of only the CSI report for set #3, the $O_{CPU}$ value may be determined as K3. As another example, in option #3, even when the UE feedbacks only the CSI report for set #3 based on its own determination, the UE may perform CSI measurement for all of set #1/#2/#3, so the $O_{CPU}$ value may be determined as K1+K2+K3. In option #3, when the base station configuration/indication allows CSI measurement for only a partial set, such as set #1/#2, the $O_{CPU}$ value may be determined as K1+K2.

Alternatively, even according to option #1, the $O_{CPU}$ value may be determined based on capability reporting of the UE. For example, according to the embodiment described above, in option #1, the $O_{CPU}$ value may be determined as K1+K2 or K1+K2+K3. In contrast, when the UE reports, through capability signaling, that the $O_{CPU}$ value for the CSI report is N, the $O_{CPU}$ value for the CSI report may be determined as N. Here, N may have a value less than or equal to K1+K2 or less than or equal to K1+K2+K3. In addition, in the case of option #3, the $O_{CPU}$ value may also be determined based on capability reporting of the UE. For example, according to the embodiment described above, in option #3, the $O_{CPU}$ value may be determined as K1+K2 or K1+K2+K3, but when the UE reports, through capability signaling, that the $O_{CPU}$ value for the CSI report is N, the $O_{CPU}$ value for the CSI report may be determined as N. Here, N may have a value less than or equal to K1+K2 or less than or equal to K1+K2+K3. That is, the $O_{CPU}$ value may be limited by capability reporting of the UE.

- As in framework #2, when one CSI-RS resource set linked for CMR is configured within a configuration (e.g., CSI-ReportConfig) for one CSI report, the $O_{CPU}$ value may be less than or equal to the total number of CSI-RS resources included in the CSI-RS resource set. For example, for CSI-RS resource set #1 configured for the CMR, CSI-RS resource #1 belonging to set #1 may be configured with a power offset #1 value, and CSI-RS resources #2 and #3 belonging to the same set may be configured with a power offset #2 value, respectively. In this case, the $O_{CPU}$ value may be determined as 3.

In a CSI report configuration such as framework #2, the $O_{CPU}$ value may be determined differently according to option #1, option #2, or option #3. For example, in option #1, when the gNB indicates, through configuration/indication, that the UE is to feedback CSI report only for a specific power offset value or a range, the $O_{CPU}$ value may be determined as the number of CSI-RS resources corresponding to each of the power offset values, and if CSI reporting is configured without a separate configuration/indication from the gNB, the $O_{CPU}$ value may be determined as 3. As another example, in option #2, when the gNB indicates, through configuration/indication, that the UE is to feedback CSI report only for a specific power offset value or a specific CSI-RS resource(s), the $O_{CPU}$ value may be determined as the number of CSI-RS resources corresponding to the specific power offset value or the number of the specific CSI-RS resource(s). As another example, in option #3, even when the UE feedbacks only the CSI report for some of the power offsets based on the determination of the UE, the $O_{CPU}$ value may be determined as 3 because the UE may perform CSI measurement for all of actual resources #1, #2, and #3. Alternatively, when the gNB indicates, through configuration/indication, that CSI measurement may be performed for some power offset values or some CSI-RS resources, the $O_{CPU}$ value may be the number of CSI-RS resources corresponding to each of the power offset values or the number of the some CSI-RS resources.

As another example, even in option #1, the $O_{CPU}$ value may be determined based on capability reporting of the UE. According to the embodiment described above, in option #1, the $O_{CPU}$ value may be determined as the number of CSI-RS resources corresponding to each of the indicated power offset values, but when the UE reports, through capability signaling, that the $O_{CPU}$ value for the CSI report is N, the $O_{CPU}$ value for the CSI report may be determined as N. Here, N may have a value equal to or less than the number of CSI-RS resources corresponding to each of the indicated power offset values. In addition, even in option #3, the $O_{CPU}$ value may be determined based on capability reporting of the UE. According to the embodiment described above, in option #3, the $O_{CPU}$ value may be 3, but when the UE reports, through capability signaling, that the $O_{CPU}$ value for the CSI report is N, the $O_{CPU}$ value for the CSI report may be determined as N. Here, N may have a value equal to or less than 3. That is, the $O_{CPU}$ value may be limited by capability reporting of the UE.

- As in framework #2, if, for a CMR in a configuration (e.g., CSI report configuration) for one CSI report, one CSI-RS resource set related to the CMR is configured, the $O_{CPU}$ value may be equal to or less than the total number of CSI-RS resources included in the CSI-RS resource set. For example, for CSI-RS resource set #1 configured for the CMR, CSI-RS resource #1 belonging to set #1 may be configured with 16 APs, and CSI-RS resource #2 and CSI-RS resource #3 belonging to the same set may be configured with 8 APs, respectively.

In this case, the $O_{CPU}$ value may be determined as 3. Even in a CSI report configuration such as framework #2, different methods may be applied according to the option #1, option #2, or option #3 described above. For example, in option #1, when, through configuration/indication of the base station, it is indicated to feedback CSI report only for a specific number of APs, the $O_{CPU}$ value may be determined as the number of CSI-RS resources corresponding to each of the specific numbers of APs. That is, when the number of APs is 16, the $O_{CPU}$ value may be 1, and when the number of APs is 8, the $O_{CPU}$ value may be 2. If CSI reporting is generated without a separate configuration/indication, the $O_{CPU}$ value may be 3. As another example, in option #2, when, through configuration/indication of the base station, it is indicated to feedback CSI report only for a specific number of APs or specific CSI-RS resource(s), the $O_{CPU}$ value may be the number of CSI-RS resources corresponding to the specific number of APs or the number of the specific CSI-RS resource(s). As another example, in option #3, even when, based on determination of the UE, CSI report is configured only for some numbers of APs, the $O_{CPU}$ value may be determined as 3 because the UE may perform CSI measurement for all of actual resources #1, #2, and #3. Alternatively, when, through configuration/indication of the base station, CSI measurement may be performed for some numbers of APs or some CSI-RS resources, the $O_{CPU}$ value may be determined as the number of CSI-RS resources corresponding to each of the numbers of APs or the number of the some CSI-RS resources.

As another example, even in option #1, the $O_{CPU}$ value may be determined based on capability reporting of the UE. According to the embodiment described above, in option #1, the $O_{CPU}$ value may be determined as the number of CSI-RS resources corresponding to each of the indicated numbers of APs. In contrast, when the UE reports, through capability signaling, that the $O_{CPU}$ value for the CSI report is N, the $O_{CPU}$ value for the CSI report may be determined as N. Here, N may have a value equal to or less than the number of CSI-RS resources corresponding to each of the indicated numbers of APs. In addition, even in option #3, the $O_{CPU}$ value may be determined based on capability reporting of the UE. According to the embodiment described above, in option #3, the $O_{CPU}$ value may be determined as 3, but when the UE reports, through capability signaling, that the $O_{CPU}$ value for the CSI report is N, the $O_{CPU}$ value for the CSI report may be determined as N. Here, N may have a value equal to or less than 3. That is, the $O_{CPU}$ value may be limited by capability reporting of the UE.

- For a CSI report configuration in which L sub-configurations are configured, the CSI report configuration corresponding to a specific CSI reporting instance may be configured/indicated to include M sub-configuration(s) less than or equal to L. In this case, the $O_{CPU}$ value for the CSI report corresponding to the CSI reporting instance may be determined as the sum of the numbers of (NZP) CSI-RS resources for the CMR related to the M sub-configurations. For example, three sub-configurations may be configured, and three CSI-RS resources may be related to sub-configuration index #0, two CSI-RS resources may be related to sub-configuration index #1, and two CSI-RS resources may be related to sub-configuration index #2. If the CSI report corresponding to a specific CSI reporting instance includes only CSI information for sub-configuration indexes #1 and #2, the $O_{CPU}$ value may be determined as 4.

In addition, according to capability signaling of the UE and/or configuration/indication of the base station, the $O_{CPU}$ value may be determined as a value less than the sum of the numbers of (NZP) CSI-RS resources for the CMR related to the M sub-configurations. In this case, for each sub-configuration index #n, a maximum $O_{CPU\_n}$ value may be determined by the UE capability and/or base station configuration, and when there are sub-configuration(s) included in the CSI report configuration corresponding to a specific CSI reporting instance, the sum of the $O_{CPU\_n}$ values corresponding to the sub-configuration(s) may be determined as the final $O_{CPU}$ value for the CSI report. Alternatively, when the numbers of CSI-RS resources (hereinafter referred to as "$K_s$") related to the sub-configurations in one CSI report configuration are the same, the total $O_{CPU}$ value may be a value obtained by multiplying $K_s$ by M. Here, the value of the scaling factor M may be determined as a value less than or equal to the number of sub-configurations according to the UE capability and/or base station configuration.

- As in framework #3, if, for a CMR in a configuration (e.g., CSI report configuration) for one CSI report, one CSI-RS resource set related to the CMR is configured, the $O_{CPU}$ value may be different from the total number of CSI-RS resources included in the CSI-RS resource set. For example, for CSI-RS resource set #1 configured for the CMR, CSI-RS resource #1 belonging to set #1 may be configured with a single power offset value and with 16 APs and 8 APs, and CSI-RS resource #2 and CSI-RS resource #3 belonging to the same set may be configured with 16 APs and with N and M power offset values, respectively. In this case, the $O_{CPU}$ value may be determined as (2+N+M).

In a CSI report configuration such as framework #3, the $O_{CPU}$ value may be determined differently according to option #1, option #2, or option #3. For example, in option #1, when, through configuration/indication of the base station, it is indicated to feedback CSI report only for a specific number of APs and/or a specific power offset value or range, the $O_{CPU}$ value may be determined as the number of CSI-RS resources corresponding to each of the specific numbers of APs and/or the specific power offset values. In contrast, when CSI reporting is generated without a separate configuration/indication of the base station, the $O_{CPU}$ value may be determined as 2+N+M. As another example, in option #2, when, through configuration/indication of the base station, it is indicated to feedback CSI report only for a specific power offset value or a specific number of APs, the $O_{CPU}$ value may be determined as the number of CSI-RS resources corresponding to the specific power offset value and/or the number of CSI-RS resources corresponding to the specific number of APs. As another example, in option #3, even when, based on determination of the UE, CSI report is feedbacked only for some numbers of APs and some power offsets, the $O_{CPU}$ value may be determined as 2+N+M because the UE may perform CSI measurement for all of actual resources #1, #2, and #3. Alternatively, when, through configuration/indication of the base station, CSI measurement may be performed for some power offset values or some numbers of APs, the $O_{CPU}$ value may be determined as the number of CSI-RS resources corresponding to each of the power offset values or the number of CSI-RS resources corresponding to the numbers of APs.

In the example described above, depending on the capability of the UE and the like, an $O_{CPU}$ value smaller than the number of power offsets to be assumed for one CSI-RS resource may be required. That is, the $O_{CPU}$ values corresponding to resource #2 and resource #3 may be determined to be smaller than N and M, respectively. For example, when the UE reports, through UE capability signaling, values K1 (less than or equal to N) and K2 (less than or equal to M), the $O_{CPU}$ values corresponding to resource #2 and resource #3 may be determined as K1 and K2, respectively. In addition, depending on the capability of the UE and the like, an $O_{CPU}$ value smaller than the number of APs to be assumed for one CSI-RS resource may be required. That is, the $O_{CPU}$ value corresponding to resource #1 may be determined to be smaller than 2. For example, when the UE reports, through UE capability signaling, a value K3 (less than or equal to 2), the $O_{CPU}$ value corresponding to resource #1 may be determined as K3.

- Alternatively, for one CSI report configuration in which the number of a plurality of APs and/or a plurality of power offset values are related, as in framework #1, framework #2, or framework #3, the $O_{CPU} = N_{CPU}$ may be defined by considering the complexity of the UE. Alternatively, the base station may, through additional indication/configuration, inform the UE that the $O_{CPU}$ value corresponding to a specific CSI report configuration is $N_{CPU}$, and the UE receiving the configuration/indication may recognize the $O_{CPU}$ value corresponding to the CSI report as the $N_{CPU}$ value and check whether CPU occupation occurs. In particular, even when, as in the framework #1, framework #2, or framework #3 described above, a plurality of sub-configurations in which the number of a plurality of APs and/or a plurality of power offset values are related are configured in the CSI report configuration, the base station may inform the UE that the $O_{CPU}$ value corresponding to the CSI report configuration is $N_{CPU}$, and the UE receiving the configuration/indication may recognize the $O_{CPU}$ value corresponding to the CSI report as the $N_{CPU}$ value and check whether CPU occupation occurs.

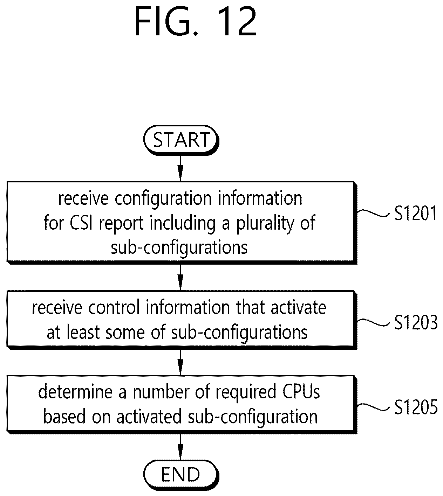

FIG. 12 illustrates an example of a procedure for determining the number of CPUs based on whether a sub-configuration is activated, according to an embodiment of the present disclosure. FIG. 12 exemplifies a method performed by a UE.

Referring to FIG. 12, in step S1201, the UE receives configuration information for a CSI report including a plurality of sub-configurations. The configuration information may include information related to CSI-RS resources or resource sets, numbers of APs, and power offsets related to the CSI report. In addition, the configuration information may include a plurality of sub-configurations, each of which is related to at least one CSI-RS resource. Then, at least some of the at least one CSI-RS resource may be configured with at least one subset with different number of APs or power offset values.

In step S1203, the UE receives control information for activating at least some of the sub-configurations. That is, the plurality of sub-configurations may not always be used in a CSI reporting opportunity. In this case, the base station may transmit control information indicating which at least one sub-configuration is to be applied in the CSI reporting opportunity. For example, the control information may be received through a MAC CE or DCI.

In step S1205, the UE determines the number of CPUs required based on the at least one activated sub-configuration. In this case, the UE may determine at least one $O_{CPU}$ value by considering the at least one activated sub-configuration, specifically based on the number of APs and power offset values related to each sub-configuration. For example, the UE may determine the $O_{CPU}$ value corresponding to the CSI report based on the number of subsets with the number of APs and/or the number of power offset values related to the sub-configurations.

[Embodiment #2] Determination of CSI computation time in a case where, for a configuration (e.g., CSI report configuration) for one CSI report, CSI-RS resources or CSI-RS resource sets having different APs are related or a plurality of power offsets are related

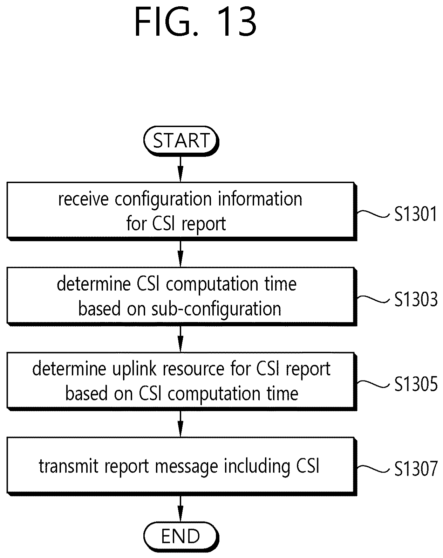

FIG. 13 illustrates an example of a procedure for transmitting a CSI report based on CSI computation time, according to an embodiment of the present disclosure. FIG. 13 exemplifies a method performed by a UE.

Referring to FIG. 13, in step S1301, the UE receives configuration information for a CSI report. The configuration information may include information related to CSI-RS resources or resource sets, numbers of APs, and power offsets related to the CSI report. In addition, the configuration information may include a plurality of sub-configurations, and the sub-configurations may be related to the number of subsets with the number of different APs or power offset values.

In step S1303, the UE determines the CSI computation time based on the sub-configurations. Here, the CSI computation time refers to the length of a time interval required for the UE to measure the channel state and to transmit the CSI report for the CSI reporting. For example, the UE may determine the CSI computation time based on at least one of the number of CSI reports required by the CSI report configuration, the complexity of the UE, and the urgency level. The CSI computation time may be expressed in units such as symbols, slots, subframes, or frames. In this case, the UE may take into account the sub-configurations for the CSI report. For example, a certain additional time determined based on the plurality of sub-configurations may be applied.

**In** step S1305, the UE determines an uplink resource for the CSI report based on the CSI computation time. When CSI reporting is triggered, the UE may be configured to transmit the CSI report after the CSI computation time. Specifically, the UE may determine the uplink resource for the CSI report such that the cyclic prefix (CP) of an uplink symbol starts after the CSI computation time (assumed to be expressed in units of symbols) from the last symbol of the signal that triggers the CSI report.

In step S1307, the UE transmits a report message including CSI. For this, the UE may receive a reference signal from the base station, measure the channel, and generate the CSI. Then, the UE may transmit the report message by using the uplink resource selected earlier.

The CSI computation time may be determined in various ways. Hereinafter, the present disclosure describes various embodiments for determining the CSI computation time.

As in framework #1, framework #2, or framework #3, for one CSI report configuration in which the number of a plurality of APs and/or a plurality of power offset values are related or a plurality of sub-configurations are configured, relaxation compared to the existing CSI computation time may be required in consideration of the complexity of the UE. For example, an additional time Talpha and/or Talpha' may be added to equation $T_{proc,CSI} = (Z)(2048 + 144) \cdot \kappa 2^{-\mu} \cdot T_C + T_{switch}$ and/or equation $T'_{proc,CSI} = (Z')(2048 + 144) \cdot \kappa 2^{-\mu} \cdot T_C$, respectively, and the value of Talpha and/or Talpha' may be determined based on a predefined value or a value reported by the UE through capability information signaling. As another example, the Z and Z' values in equation $T_{proc,CSI} = (Z)(2048 + 144) \cdot \kappa 2^{-\mu} \cdot T_C + T_{switch}$ and equation $T'_{proc,CSI} = (Z')(2048 + 144) \cdot \kappa 2^{-\mu} \cdot T_C$ may be replaced with Z+alpha and Z'+alpha', respectively, and the values of alpha and alpha' may be determined based on a predefined value or on UE capability information signaling. For example, the CSI computation time relaxation may be applied only to option #1 or option #3. In the case of option #2, since only CSI information corresponding to a single number of APs and/or a single power offset and/or a single sub-configuration is included in one CSI report, the computation time relaxation may not be applied. The CSI computation time relaxation may be applied when periodic/aperiodic CSI reporting is triggered through DCI.

According to Section 5.4 of [Table 10], when a specific configuration exists, the UE may perform CSI reporting quickly. Referring to Table 5.4-1 of [Table 10], as CSI computation delay requirement (computation delay requirement) 1, a fast CSI feedback timing $(Z_1, Z'_1)$ is defined. However, as in framework #1, framework #2, or framework #3, for one CSI report configuration in which the number of a plurality of APs and/or a plurality of power offset values are related or a plurality of sub-configurations are configured, a restriction may occur such that CSI computation delay requirement 1 (e.g., $(Z_1, Z'_1)$ ) is not applied in consideration of the complexity of the UE. That is, CSI computation delay requirement 1 (e.g., $(Z_1, Z'_1)$ ) may be applied only when, for one CSI report configuration, the number of a plurality of APs and/or a plurality of power offset values are not related or a plurality of sub-configurations are not configured. In the case of option #2, since only a single number of APs and/or a single power offset is included in one CSI report, the restriction described above may apply only to option #1 or option #3 and may not apply to option #2. In addition, the restriction described above may not apply when only CSI information corresponding to less than or equal to L or L=1 is reported through CSI reporting, among L sub-configurations configured with L greater than 1.

[Embodiment #3] Checking whether CPU occupation occurs with a granularity smaller than CSI reporting when, in a configuration (e.g., CSI report configuration) for one CSI report, different APs are related to CSI-RS resources or CSI-RS resource sets, or a plurality of power offsets are related

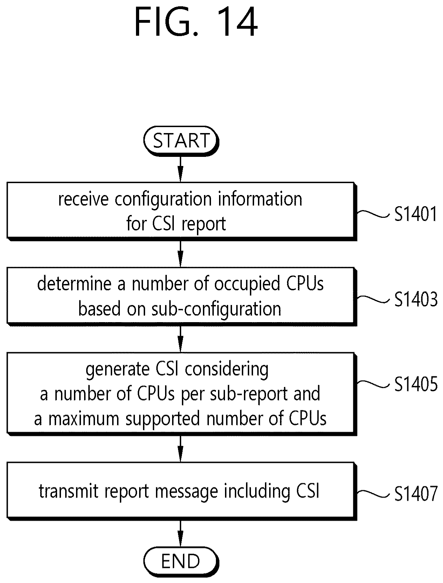

FIG. 14 illustrates an example of a procedure for performing CSI reporting based on the number of CPUs per sub-report according to one embodiment of the present disclosure. FIG. 14 illustrates a method performed by the UE.

Referring to FIG. 14, in step S1401, the UE receives configuration information for a CSI report. The configuration information may include information related to CSI-RS resources or resource sets, numbers of APs, and power offsets related to the CSI report. In addition, the configuration information may include a plurality of sub-configurations, and the sub-configurations may be related to subsets with the number of different APs or power offset values.

In step S1403, the UE determines the number of CPUs occupied based on the sub-configurations included in the CSI report configuration. In other words, the UE determines at least one $O_{CPU}$ value required for at least one CSI report based on the configuration information. In this case, the UE may consider the sub-configurations and, specifically, determine at least one $O_{CPU}$ value based on the operation policy for the sub-configurations (e.g., framework #1/#2/#3, option #1/#2/#3, etc.) and the number of APs and power offset values related to each of the sub-configurations. For example, the UE may determine the $O_{CPU}$ value corresponding to the CSI report based on the number of subsets with the number of APs and/or the number of power offset values related to the sub-configurations. In this case, when only some of the sub-configurations are activated according to an aperiodic scheme or a semi-persistent scheme, the activation status of the sub-configurations may be taken into account. For example, the greater the number of CSIs considered, the larger at least one $O_{CPU}$ value may be determined. In addition, when N CSI reports are configured to be processed or updated in the corresponding opportunity, the UE may determine $O^{(0)}_{CPU}$ value to $O^{(N-1)}_{CPU}$ value, that is, N $O_{CPU}$ values. In this case, according to one embodiment, when the CSI report includes a plurality of sub-configurations, the $O_{CPU}$ value may be expressed as the sum of the numbers of CPUs for each sub-report corresponding to the sub-configurations.

In step S1405, the UE generates at least one CSI by considering the number of CPUs for each sub-report and the maximum supported number of CPUs. That is, the UE determines the number of unoccupied CPUs by subtracting the number of already occupied CPUs $N_{CPU}$ from the maximum supported number of CPUs $N_{CPU}$, and compares the number of CPUs for the configured CSI reports (e.g., the sum of $O_{CPU}$ values) with the number of unoccupied CPUs. When the number of CPUs for the configured CSI reports is greater than the number of unoccupied CPUs, the UE may drop at least one CSI report or at least one sub-report based on priority. Therefore, for the remaining at least one CSI report and at least one sub-report excluding the at least one dropped CSI report, the UE may measure the channel based on a reference signal and generate at least one CSI. In this case, when some of the sub-reports included in one CSI report are dropped, the selected sub-reports to be dropped may be determined based on the priority among the sub-reports.

In step S1407, the UE transmits a report message including at least one CSI. In other words, the UE generates a report message including at least one CSI and may transmit the report message to the base station through a resource indicated by the configuration information.

As described with reference to FIG. 14, dropping may occur on a sub-report units of the CSI report. Through this, at least part of the CSI report may be feedbacked, thereby enabling efficient CSI feedback. Hereinafter, the present disclosure describes embodiments for the sub-reports.

When the number of unoccupied CPUs, that is, $N_{CPU}$-L, is smaller than the current number of CPUs to be processed/updated (e.g., $\sum_{n=0}^{M-1} O_{CPU}^{(n)}$), CSI information corresponding to some CSI reports with lower priority according to the priority of the CSI reports may not be updated. Specifically, the maximum M satisfying the equation $\sum_{n=0}^{M-1} O_{CPU}^{(n)} \leq N_{CPU} - L$ is determined, and updating may not be performed for N-M CSI reports among the total N CSI reports. In this case, when the $O_{CPU}$ value $O^{(M)}_{CPU}$ corresponding to the (M+1)-th CSI report is very large, including the (M+1)-th CSI report may cause the number of CPUs to be processed/updated to exceed $N_{CPU}$-L, while excluding the (M+1)-th CSI report may cause it to be significantly less than $N_{CPU}$-L. In this case, it may be more advantageous to report at least part of the (M+1)-th CSI report rather than dropping the entire (M+1)-th CSI report.

As in the proposals described above, when the number of a plurality of APs or a plurality of power offset values are related to CSI-RS resources or CSI-RS resource sets included in a configuration (e.g., CSI report configuration) for one CSI report, the $O_{CPU}$ value for the CSI report may become significantly large. Therefore, for more efficient CSI reporting, it may be defined that the UE divides the CSI report into a plurality of virtual CSI sub-reports and updates some of the CSI sub-reports by utilizing the remaining CPUs.

Example 3-1: as in framework #1, when, for a CMR in a configuration (e.g., CSI report configuration) for one CSI report, a plurality of CSI-RS resource sets are related, each CSI-RS resource set may be configured as one CSI sub-report. For example, for the CMR, CSI-RS resource set #1, CSI-RS resource set #2, and CSI-RS resource set #3 may be related, K1 CSI-RS resources belonging to set #1 may be configured with 16 APs, K2 CSI-RS resources belonging to set #2 may be configured with 8 APs, and K3 CSI-RS resources belonging to set #3 may be configured with 4 APs. In this case, the $O_{CPU}^{(M)}$ value of the CSI report is divided into $O_{CPU}^{(M\_1)} + O_{CPU}^{(M\_2)} + O_{CPU}^{(M\_3)}$, and each $O_{CPU}$ value may correspond to each CSI-RS resource set. Even when $\sum_{n=0}^{M-1} O_{CPU}^{(M)} > N_{CPU} - L$, if $\sum_{n=0}^{M-1} O_{CPU}^{(n)} + O_{CPU}^{(M\_1)} + O_{CPU}^{(M\_2)} \leq N_{CPU} - L$, the UE may update the CSI reports corresponding to M_1 and M_2. In this case, the mapping between the three CSI-RS resource sets and M_1/M_2/M_3 may be predefined or may follow a preset mapping relationship. For example, the mapping may be performed in ascending or descending order of the set index, the set index related to a larger number of APs may be mapped with higher priority, or the set index related to a smaller number of APs may be mapped with higher priority. Among M_1, M_2, and M_3 described above, the priority of M_1 may be determined as the highest, and the priority of M_3 may be determined as the lowest.

Example 3-2: as in framework #2, when one CSI-RS resource set related to a CMR in a CSI report configuration (e.g., CSI-ReportConfig) is configured, CSI-RS resources in the CSI-RS resource set may be grouped, and each group may be configured as one CSI sub-report. For example, for the CSI-RS resource set #1 configured as a CMR, the CSI-RS resource #1 belonging to the set #1 may be configured with 16 APs, and the CSI-RS resource #2 and the CSI-RS resource #3 belonging to the same resource set may be configured with 8 APs, respectively. In this case, the CSI-RS resource #1 may be configured or defined as group #1 or sub-configuration #1, and the CSI-RS resource #2 or the CSI-RS resource #3 may be configured or defined as group #2 or sub-configuration #2. The $O_{CPU}^{(M)}$ value of the corresponding CSI report may be divided into $O_{CPU}^{(M\_1)} + O_{CPU}^{(M\_2)}$, and each $O_{CPU}$ value may correspond to a group index or a sub-configuration index in the CSI-RS resource set. If $\sum_{n=0}^{M-1} O_{CPU}^{(M)} > N_{CPU} - L$ and $\sum_{n=0}^{M-1} O_{CPU}^{(n)} + O_{CPU}^{(M\_1)} \leq N_{CPU} - L$, the UE may update up to the CSI report corresponding to M_1. In this case, the mapping between the two groups and M_1/M_2 may be determined in advance or based on a pre-configured mapping relationship. For example, the mapping may be performed in ascending or descending order of group indexes, or the group index related to a larger number of APs may be mapped with a higher priority, or the group index related to a smaller number of APs may be mapped with a higher priority. Therefore, among M_1 and M_2 described above, the priority of M_1 may be determined to be the highest, and the priority of M_2 may be determined to be the lowest.

Example 3-3: when L sub-configurations greater than 1 are configured in a CSI report configuration (e.g., CSI-ReportConfig) for one CSI report, the UE may report CSIs corresponding to M sub-configurations less than or equal to L in a specific CSI report instance. When M is 2, the $O_{CPU}^{(M)}$ value of the corresponding CSI report may be divided for each sub-configuration and expressed as $O_{CPU}^{(M\_1)} + O_{CPU}^{(M\_2)}$. Here, although the case where M is 2 is exemplified, the proposed technique is not limited thereto and may be equally extended to cases where M is greater than 2. Each $O_{CPU}$ value may correspond to each sub-configuration index. If $\sum_{n=0}^{M-1} O_{CPU}^{(M)} > N_{CPU} - L$ and $\sum_{n=0}^{M-1} O_{CPU}^{(n)} + O_{CPU}^{(M\_1)} \leq N_{CPU} - L$, the UE may update up to the CSI report corresponding to M_1. In this case, the mapping between the two sub-configurations and M_1/M_2 may be determined in advance or based on a pre-configured mapping relationship. For example, the mapping may be performed in ascending or descending order of sub-configuration indexes, or the sub-configuration index related to a larger number of APs or a power offset value may be mapped with a higher priority, or the sub-configuration index related to a smaller number of APs or a power offset value may be mapped with a higher priority. Among the M_1 and M_2 described above, the priority of M_1 may be the highest, and the priority of M_2 may be the lowest.

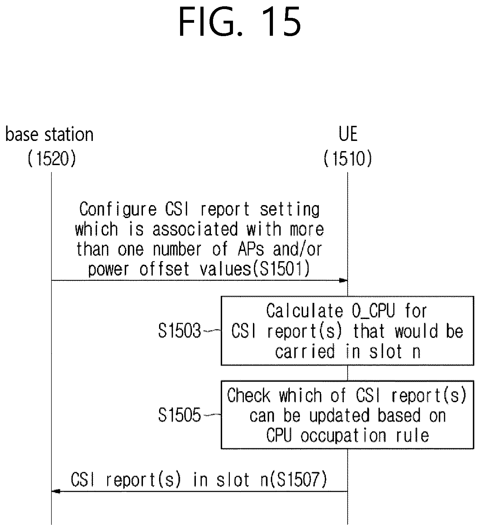

FIG. 15 illustrates an example of a procedure for transmitting a CSI report according to an embodiment of the present disclosure. FIG. 15 exemplifies signal exchanges between a UE 2310 and a base station 2320.

Referring to FIG. 15, in step S1501, the base station 1520 transmits configuration information for a CSI report to the UE 1510. Here, the CSI report may configure the UE 1510 such that a plurality of AP numbers and/or a plurality of power offset values are related. In step S1503, the UE 1510 calculates an $O_{CPU}$ value for the CSI report configuration according to various embodiments described above. In step S1505, the UE 1510 determines which CSI report(s) will be updated based on a CPU occupancy rule. In other words, the UE 1510 checks whether the number of unoccupied CPUs in slot #n is greater than the calculated $O_{CPU}$ value. Accordingly, the UE 1510 updates the CSI corresponding to the CSI report configuration, and if not, in step S1507, the UE may perform CSI reporting in slot #n without updating the CSI.

The present disclosure proposes a CSI reporting procedure related to the number of CPUs when, for one CSI report configuration, a plurality of AP numbers are related or a plurality of power offset values are related, in preparation for a case where a base station turns antennas on/off or adjusts power values. According to the proposed technique, CPU occupancy may be efficiently controlled, and furthermore, an energy saving technique in which the base station dynamically turns off some antennas or reduces power values may be supported, thereby enabling a reduction in the power consumption of the base station.

The proposed methods described above may be implemented independently, but may also be implemented in a form combining (or merging) some of the proposed methods. Information on whether the proposed methods are applied (or information on rules for the proposed methods) may be defined by a rule that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

**INDUSTRIAL APPLICABILITY**

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

**Claims**

1. A method performed by a user equipment (UE) in a wireless communication system, the method comprising:

   receiving configuration information for a channel state information (CSI) report;
   receiving control information activating at least one sub-configuration among a plurality of sub-configurations included in the CSI report;
   determining a number of first CSI processing units (CPUs) for the CSI report;
   determining whether to drop the CSI report based on the number of first CPUs and a maximum supported number of second CPUs;
   transmitting a report message including the CSI report based on that the CSI report is not dropped; and
   transmitting a report message not including the CSI report based on that the CSI report is dropped,
   wherein the number of first CPUs is determined based on a number of CSI-reference signal (RS) resources corresponding to the at least one sub-configuration.

2. The method of claim 1, wherein the CSI report includes aperiodic or semi-static CSI report.

3. The method of claim 1, wherein the sub-configurations are configured to at least one of subsets with different number of antenna port (AP) or different power offset value.

4. The method of claim 1, wherein the sub-configurations are distinguished by at least one of a number of APs or a power offset value related to a CSI-RS resource

5. The method of claim 1, wherein the number of first CPUs is determined to be equal to at least one of a number of subsets of a number of APs or a number of power offset values configured at least one CSI-RS related to at least one sub-configuration.

6. The method of claim 1, wherein the number of first CPUs is determined to be equal to a sum of a number of CSI-RSs included in the at least one sub-configuration.

7. The method of claim 1, wherein the number of first CPUs is determined based on a number of CPUs indicated through a capability report of the UE.

8. The method of claim 1, further comprising:

   determining computation time for at least one CSI included in the CSI report,
   wherein the computation time is determined based on an additional time for a relaxation determined by the at least one sub-configuration.

9. The method of claim 8, wherein the additional time is applied based on the CSI report being triggered by downlink control information (DCI).

10. The method of claim 1, wherein the drop of the CSI report is determined for each of sub-reports corresponding to the sub-configurations.

11. A user equipment (UE) in a wireless communication system, comprising:

a transceiver; and
a processor connected to the transceiver,
wherein the processor is configured to:

receive configuration information for a channel state information (CSI) report;
receive control information activating at least one sub-configuration among a plurality of sub-configuration included in the CSI report;
determine a number of first CSI processing units (CPUs) for the CSI report;
determine whether to drop the CSI report based on the number of first CPUs and a maximum supported number of second CPUs;
transmit a report message including the CSI report based on that the CSI report is not dropped; and
transmit a report message not including the CSI report based on that the CSI report is dropped,
wherein the number of first CPUs is determined based on a number of CSI-RS resources corresponding to the at least one sub-configuration.

12. A communication device comprising:

at least one processor; and
at least one computer memory connected to the at least one processor and storing instructions that direct operations when executed by the at least one processor, the operations comprising:

receiving configuration information for a channel state information (CSI) report;
receiving control information activating at least one sub-configuration among a plurality of sub-configuration included in the CSI report;
determining a number of first CSI processing units (CPUs) for the CSI report;
determining whether to drop the CSI report based on the number of first CPUs and a maximum supported number of second CPUs;
transmitting a report message including the CSI report based on that the CSI report is not dropped; and
transmitting a report message not including the CSI report based on that the CSI report is dropped,
wherein the number of first CPUs is determined based on a number of CSI-RS resources corresponding to the at least one sub-configuration.

13. A non-transitory computer-readable medium storing at least one instruction, the at least one instruction being executable by a processor, the at least one instruction causing a device, the processor, to:

receive configuration information for a channel state information (CSI) report;
receive control information activating at least one sub-configuration among a plurality of sub-configuration included in the CSI report;
determine a number of first CSI processing units (CPUs) for the CSI report;
determine whether to drop the CSI report based on the number of first CPUs and a maximum supported number of second CPUs;
transmit a report message including the CSI report based on that the CSI report is not dropped; and
transmit a report message not including the CSI report based on that the CSI report is dropped,
wherein the number of first CPUs is determined based on a number of CSI-RS resources corresponding to the at least one sub-configuration.

# FIG. 1

# FIG. 2

200

202

First Device

Processor(s)

206

Transceiver(s)

208

Memory(s)

204

# FIG. 3

Radio Frame 10ms

Fixed Size

Subframe 1ms

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbol

# FIG. 4

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG. 5

# FIG. 6

# FIG. 7

EP 4 668 607 A1

# FIG. 8

# FIG. 9

```
        ┌──────────────┐
        │    START     │
        └──────┬───────┘
               │
               ▼
  ┌──────────────────────────────┐
  │   IDENTIFY NES SOLUTION(S)    │
  └──────────────┬───────────────┘
                 │
                 ▼
  ┌──────────────────────────────┐
  │   PERFORM SIGNALING FOR NES   │
  └──────────────┬───────────────┘
                 │
                 ▼
  ┌──────────────────────────────┐
  │  PERFORM OPERATIONS FOR NES   │
  └──────────────┬───────────────┘
                 │
                 ▼
        ┌──────────────┐
        │     END      │
        └──────────────┘
```

# FIG. 10

TERMINAL                                    BASE STATION

CONFIGURATION INFORMATION FOR CSI

CSI-RS

DETERMINE CSI

CSI REPORT

# FIG. 11

START

receive configuration information
for CSI report    S1101

determine a number of occupied CPUs
based on sub-configuration    S1103

generate CSI considering
a number of determined CPUs and
a maximum supported number of CPUs    S1105

transmit report message including CSI    S1107

END

# FIG. 12

START

receive configuration information
for CSI report including a plurality of
sub-configurations — S1201

receive control information that activate
at least some of sub-configurations — S1203

determine a number of required CPUs
based on activated sub-configuration — S1205

END

# FIG. 13

```
        ( START )
            │
            ▼
┌──────────────────────────┐
│  receive configuration   │
│   information            │──── S1301
│   for CSI report         │
└──────────────────────────┘
            │
            ▼
┌──────────────────────────┐
│ determine CSI computation│
│   time                   │──── S1303
│ based on sub-configuration│
└──────────────────────────┘
            │
            ▼
┌──────────────────────────┐
│ determine uplink resource│
│   for CSI report         │──── S1305
│ based on CSI computation │
│   time                   │
└──────────────────────────┘
            │
            ▼
┌──────────────────────────┐
│ transmit report message  │──── S1307
│   including CSI          │
└──────────────────────────┘
            │
            ▼
        ( END )
```

# FIG. 14

```
                    ( START )
                        │
                        ▼
        ┌───────────────────────────────┐
        │   receive configuration information │───~ S1401
        │         for CSI report          │
        └───────────────────────────────┘
                        │
                        ▼
        ┌───────────────────────────────┐
        │  determine a number of occupied CPUs │───~ S1403
        │     based on sub-configuration     │
        └───────────────────────────────┘
                        │
                        ▼
        ┌───────────────────────────────┐
        │      generate CSI considering      │
        │  a number of CPUs per sub-report and │───~ S1405
        │  a maximum supported number of CPUs  │
        └───────────────────────────────┘
                        │
                        ▼
        ┌───────────────────────────────┐
        │  transmit report message including CSI │───~ S1407
        └───────────────────────────────┘
                        │
                        ▼
                    ( END )
```

# FIG. 15

base station
(1520)

UE
(1510)

Configure CSI report setting
which is associated with more
than one number of APs and/or
power offset values(S1501)

S1503 — Calculate O_CPU for
CSI report(s) that would be
carried in slot n

S1505 — Check which of CSI report(s)
can be updated based on
CPU occupation rule

CSI report(s) in slot n(S1507)

## INTERNATIONAL SEARCH REPORT

| International application No. |
|---|
| **PCT/KR2024/002064** |

| A. | CLASSIFICATION OF SUBJECT MATTER |
|---|---|
| | **H04B 7/06**(2006.01)i; **H04W 52/02**(2009.01)i; **H04W 52/36**(2009.01)i; **H04W 24/08**(2009.01)i; **H04W 88/02**(2009.01)i |

According to International Patent Classification (IPC) or to both national classification and IPC

| B. | FIELDS SEARCHED |
|---|---|

Minimum documentation searched (classification system followed by classification symbols)

H04B 7/06(2006.01); H04L 1/00(2006.01); H04L 5/00(2006.01); H04W 24/02(2009.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI, 보고(report), CPU, 설정(configuration), 드랍(drop)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 11581932 B2 (QUALCOMM INCORPORATED) 14 February 2023 (2023-02-14) See column 7, line 32 - column 13, line 64; and claims 1-30. | 1-2,6-7,10-13 |
| A | | 3-5,8-9 |
| Y | WO 2022-201077 A1 (LENOVO (SINGAPORE) PTE. LTD.) 29 September 2022 (2022-09-29) See paragraphs [0044]-[0075]; and claims 1-15. | 1-2,6-7,10-13 |
| A | CN 115334538 A (VIVO COMMUNICATION TECHNOLOGY CO., LTD.) 11 November 2022 (2022-11-11) See paragraphs [0014]-[0032]; and claims 1-37. | 1-13 |
| A | US 2021-0211225 A1 (NEC CORPORATION) 08 July 2021 (2021-07-08) See paragraphs [0102]-[0106]; and claims 1-19. | 1-13 |
| DA | 3GPP; TSG RAN; NR; Physical layer procedures for data (Release 17). 3GPP TS 38.214 V17.4.0 (December 2022). 04 January 2023. See sections 5.2.1.4.2, 5.2.1.5, 5.2.1.6 and 5.4. | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **14 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002064**

| Patent document cited in search report | | | Publication date (day/month/year) | Patent family member(s) | | | Publication date (day/month/year) |
|---|---|---|---|---|---|---|---|
| US | 11581932 | B2 | 14 February 2023 | BR | 112022007274 | A2 | 05 July 2022 |
| | | | | CN | 114586296 | A | 03 June 2022 |
| | | | | CN | 114586296 | B | 29 September 2023 |
| | | | | CN | 117240381 | A | 15 December 2023 |
| | | | | EP | 4049382 | A1 | 31 August 2022 |
| | | | | KR | 10-2022-0086568 | A | 23 June 2022 |
| | | | | US | 2021-0126687 | A1 | 29 April 2021 |
| | | | | US | 2023-0170964 | A1 | 01 June 2023 |
| | | | | WO | 2021-081066 | A1 | 29 April 2021 |
| WO | 2022-201077 | A1 | 29 September 2022 | CN | 116982343 | A | 31 October 2023 |
| | | | | EP | 4315952 | A1 | 07 February 2024 |
| CN | 115334538 | A | 11 November 2022 | | None | | |
| US | 2021-0211225 | A1 | 08 July 2021 | CN | 112154704 | A | 29 December 2020 |
| | | | | JP | 2021-531671 | A | 18 November 2021 |
| | | | | WO | 2019-222876 | A1 | 28 November 2019 |

Form PCT/ISA/210 (patent family annex) (July 2022)